(19) Europäisches Patentamt
European Patent Office
Office européen des brevets

(11) EP 0 790 964 B1

(12) **FASCICULE DE BREVET EUROPEEN**

(45) Date de publication et mention de la délivrance du brevet:
**07.10.1998 Bulletin 1998/41**

(21) Numéro de dépôt: **95939330.7**

(22) Date de dépôt: **06.11.1995**

(51) Int Cl.[6]: **C04B 35/571**

(86) Numéro de dépôt international:
**PCT/FR95/01458**

(87) Numéro de publication internationale:
**WO 96/15080 (23.05.1996 Gazette 1996/23)**

(54) **PROCEDE DE PREPARATION DE MATERIAUX CERAMIQUES A BASE DE CARBURE DE SILICIUM ET COMPOSITION DE DEPART SUSCEPTIBLE D'ETRE MISE EN UVRE DANS CE PROCEDE**

VERFAHREN ZUR HERSTELLUNG KERAMISCHER MATERIALIEN AUF SILICIUMKARBIDBASIS UND AUSGANGSZUSAMMENSETZUNG FÜR DIESES VERFAHREN

METHOD FOR PREPARING SILICON CARBIDE CERAMIC MATERIALS, AND STARTING COMPOSITION FOR USE WITH THIS METHOD

(84) Etats contractants désignés:
**AT BE CH DE DK ES FR GB GR IE IT LI LU MC NL PT SE**

(30) Priorité: **09.11.1994 FR 9413728**

(43) Date de publication de la demande:
**27.08.1997 Bulletin 1997/35**

(73) Titulaire: **FLAMEL TECHNOLOGIES**
**F-69693 Venissieux Cédex (FR)**

(72) Inventeurs:
- **BRYSON, Nathan**
  **F-69520 Grigny (FR)**
- **BOURI, Bruno**
  **F-34540 Balaruc-les-Bains (FR)**

(74) Mandataire: **Fleurance, Raphael**
**Cabinet Beau de Loménie,**
**51, Avenue Jean Jaurès,**
**B.P. 7073**
**69301 Lyon Cédex 07 (FR)**

(56) Documents cités:
**EP-A- 0 382 651**
**DE-A- 3 447 411**
**US-A- 4 639 501**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 790 964 B1

Printed by Jouve, 75001 PARIS (FR)

## Description

### DOMAINE TECHNIQUE:

Le domaine de la présente invention est celui de la préparation de matériaux céramiques à base de carbure de silicium, à partir de polymères précurseurs de céramiques. Ces matériaux céramiques se présentent sous forme de fibres, de films, de liants, d'éléments de construction, de matrices ou analogues et sont destinés à être mis en oeuvre dans l'électronique, l'électro-optique, la technologie des semi-conducteurs et l'aéronautique, entre autres.

L'obtention de telles céramiques à base SiC passe par la pyrolyse, e. g. sous vide, sous atmosphère inerte ou en présence d'un gaz réactif, de composés précurseurs polymères, composés de carbone et de silicium.

### ART ANTERIEUR :

Les efforts de recherche et de développement dans le domaine de la synthèse de matériaux céramiques SiC portent, tout d'abord, sur la simplification de la méthodologie et la diminution des coûts de procédé et de matières premières.

On cherche, également, à disposer d'intermédiaires de synthèse ou de précurseurs de céramiques aisément manipulables et stockables et présentant des propriétés contrôlables (viscosité, point de fusion ...), donc adaptables dans différents types de formages, spécifiques des applications finales visées (fibres, revêtements, films, matrices ou analogues).

En outre, on vise l'obtention d'une céramique de haute pureté en SiC, c'est-à-dire avec un ratio molaire $Si/C \simeq 1$ et présentant des quantités minimales d'impuretés du type oxygène ou carbone libre.

Enfin et surtout, c'est l'amélioration des rendements de pyrolyse qui constitue le principal but à atteindre dans la synthèse de SiC.

Les produits de départ, employés dans cette technologie de synthèse et s'insérant dans le cadre de l'invention, sont, en effet, des polysilanes, dont, notamment, des polyalkylsilanes et, plus particulièrement encore, des polyméthylhydrogénosilanes (PMHS) et/ou des polyphénylhydrogénosilanes (PPHS).

Les PMHS sont traditionnellement préparés par condensation de méthyldichlorosilane ($MeSiHCl_2$) et d'un métal alcalin, tel que le sodium :

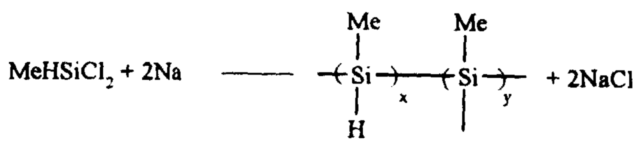

L'analyse de ces polymères par RMN 1H, révèle que x varie entre 0,3 et 1, avec **x** + **y** = 1.

Une telle préparation est décrite, notamment, dans le brevet **EP 0 152 704.** Cette préparation souffre d'être longue (4 jours), de faible rendement (inférieur à 60 %) et de conduire à des composés polymères de solubilité limitée. Ce brevet divulgue ainsi des précurseurs de céramiques obtenus en faisant réagir des polyhydrogénosilanes, du type polyphénylhydrogénosilane, avec des composés vinyliques, du type divinylbenzène, et en présence de platine. En fait, ces précurseurs polymères sont solides et conduisent à de faibles rendements de pyrolyse.

La demande de brevet **EP 0 217 539** divulgue, également, une synthèse de polyméthylhydrogénosilane (PMHS), permettant d'obtenir des produits liquides, pâteux ou solides, selon les conditions mises en oeuvre. En particulier, il est question de précurseurs de céramiques issus de la réticulation de PMHS en présence de composés vinyliques et d'un catalyseur d'hydrosilylation. Cette réticulation est sensée augmenter les rendements de pyrolyse.

La demande de brevet **EP 0 382 651** a pour objet la préparation de polysilanes précurseurs de céramiques et liquides à température ambiante. Parmi les polysilanes concernés figurent les copolymères à motifs Si-Vinyle et Si-H avec des bloqueurs de chaînes dérivant du chlorure de benzyle ou du triméthylhydrogénosilane. Ces polymères peuvent être mélangés à des homopolymères à motifs Si-H. Le procédé de préparation considéré comprend, également, une étape d'hydrolyse du polymère, qui a pour conséquence néfaste d'augmenter notablement le taux d'oxygène présent dans le polymère. Or, on sait que de forts taux d'$O_2$ perturbent le rendement de pyrolyse et la pureté du SiC visé. De plus, ce document ne fait, lui aussi, pas mention d'une quelconque maîtrise de la viscosité des polymères obtenus.

Il ressort de ce qui précède que les références antérieures sus-mentionnées proposent des précurseurs de céramiques obtenus en traitant des PMHS avec des agents de réticulation du type insaturé et, plus particulièrement, de nature vinylique. Ce traitement connu correspond à une hydrosilylation, conduisant à des pontages entre les fonctions

SiH et les groupements insaturés mis en oeuvre. Jusqu'alors, cette hydrosilylation n'était envisagée qu'en recourant impérativement à des catalyseurs du type initiateurs radicalaires, composés organométalliques ou bien encore en mettant en oeuvre une activation uv ou thermique haute température. Tout cela complique le procédé car le contrôle de la catalyse est toujours délicat, si bien que l'on peut aboutir, inopinément, à la formation de polymères insolubles et inutilisables. En outre, les catalyseurs employés sont des métaux polluants indésirables. Les rendements de pyrolyse de ces précéramiques ou précurseurs hydrosilylés sont supérieurs à ceux des polyalkyles (polyméthylsilanes) de départ.

Pour compléter cette revue de l'état de la technique, il convient de signaler une famille de procédés qui s'inscrit dans une problématique totalement différente de celle propre à l'invention. Il s'agit en effet de l'utilisation de dérivés du bore en vue :

**a**) - soit de favoriser la transformation chimique de polysilanes en polycarbosilanes qui intègrent, à la différence des polysilanes, des atomes de carbone dans la chaîne principale de leur squelette polymère.
**b**) - soit d'une incorporation significative du bore dans la céramique finale,

L'objectif **a**) renvoie aux travaux du professeur YAJIMA, montrant l'effet positif de l'utilisation de dérivés de bore (polyborodiphénylsiloxane), dans le cadre de la transformation de polydiméthylsilane en polycarbosilane (transposition de KUMADA) (cf brevets **US 4 220 600 - 4 248 814 - 4 283 376 - 4 604 367** = **DE-A-34 47 411).** Etant donné que ces dérivés de bore induisent l'apparition du carbone, il est clair que cette information technique n'était pas de nature à inciter leur sélection par l'homme du métier cherchant à préparer des précéramiques et des céramiques sans excès de carbone.

Concernant l'objectif **b**), BURNS et ZANK, ainsi que BANEY ou WEST, ont décrit le traitement de polysilanes par des métaux carbonyles ou des composés, tels que $BR_3$, avec R = alkyle (**EP 0 367 497, US 4 906 710** et **US 4 945 072),** de façon à former des polymétallosilanes, eux-mêmes précurseurs de céramiques dopées en métaux. Dans le même domaine, le brevet **US 4 762 895** de CHANDRA et al. propose la préparation de métallopolysilanes à partir de chlorosilanes et de dérivés métalliques (halogénures de bore : $BBr_3$, $BCl_3$, $BClBr_2$, $BI_3$).

Les céramiques mixtes SiC/métal, obtenues par ces procédés, n'ont rien à voir avec celles visées par l'invention.

L'**US-A-4 604 367** ( = **DE-A-34 47 411**) cumule les objectifs a) et b) ci-dessus et, de facto, les inconvénients y afférents, notamment sur les céramiques finales, qui ne sont pas pures (moindre qualité) et qui ne peuvent être obtenues avec de forts rendements de pyrolyse.

**EXPOSE SUCCINCT DE L'INVENTION :**

Dans cet état de connaissance, l'un des buts de l'invention est de fournir un procédé de préparation de matériaux céramiques et/ou de précurseurs de ceux-ci à partir de polyorganosilanes ne présentant que des atomes de silicium dans leur chaîne principale, qui remédie aux inconvénients de l'art antérieur et qui satisfasse aux exigences de pureté, rendement, souplesse de mise en oeuvre et d'économie recherchées dans ce domaine technique et mentionnées dans le préambule du présent exposé.

Ces buts et d'autres sont atteints par la présente invention qui concerne un procédé de préparation de matériaux céramiques à base de carbure de silicium (SiC), à partir de polysilanes, caractérisé :

☐ en ce que l'on sélectionne le ou les polysilanes parmi des polyalkyl et/ou aryl hydrogénosilanes de formule :

$$\text{(I)} \qquad \left[ (RSiH)_x \quad (RSiL)_y \quad (R_3^1Si)_z \right]_n$$

dans laquelle :

- **R** = symbole désignant des radicaux identiques ou différents et représentant l'hydrogène, un alkyle inférieur, linéaire ou ramifié, substitué ou non et ayant de 1 à 6 C, un cycloalkyle, substitué ou non et ayant de 3 à 6 C, ou un aryle, substitué ou non et ayant de 6 à 10 C, de préférence 6 C,
- **R¹** = symbole désignant des radicaux identiques ou différents et représentant l'hydrogène ou un groupement aliphatique, alicyclique, de préférence (cyclo)alkyle, (cyclo)alcényle, linéaire ou ramifié, aryle, aralkyle ou aralcényle, éventuellement substitué, les groupements méthyle, éthyle et propyle étant particulièrement préférés,
- **L** = radical répondant à la même définition que **R¹** ou lien valentiel reliant l'atome de silicium à un autre atome

de silicium appartenant à une autre chaîne,
- **n** ≥ 1, de préférence **n** ≥ 3 et, plus préférentiellement encore, **n** ≥ 10,
- **x** + **y** = 1, avec :

  . 0,3 ≤ **x** ≤ 1 et, de préférence, 0,5 ≤ **x** ≤ 0,8,
  . 0 ≤ **y** ≤ 0,7,
  . 0 ≤ **z** ≤ 0,5 et quand **z** = 0, la valence libre de chaque silicium d'extrémité est occupée par $\mathbf{R^2}$, symbole désignant des radicaux identiques ou différents et représentant un H ou un alkyle $\mathbf{C_1}$-$\mathbf{C_6}$,

☐ en ce que l'on pyrolyse les polyalkylhydrogénosilanes (**I**) en présence d'au moins un composé boré pour promouvoir la réticulation des polyalkylhydrogénosilanes par formation de liaison Si-Si et, éventuellement, d'au moins un agent fournisseur de carbone et formé par un réticulant organosilicié insaturé et, plus préférentiellement encore, par un composé silicié vinylique,

☐ et en ce que, outre la pyrolyse, on prévoit au moins un traitement thermique intermédiaire de chauffage du mélange polysilanes/agent de réticulation, ledit traitement précédant la pyrolyse et se déroulant à une température comprise entre 150 et 350 °C et, plus préférentiellement encore, entre 170 °C et 300 °C.

**EXPOSE DETAILLE DE L'INVENTION :**

Selon la présente invention, on met, avantageusement, en oeuvre une quantité de composé boré, suffisante pour induire un effet catalytique et pas assez importante pour que le composé boré soit considéré comme additif ou coréactif.

La Demanderesse a eu le mérite de mettre en évidence que la combinaison d'une sélection de polysilanes **(I)** de départ particuliers, d'une pyrolyse et d'une mise en oeuvre de composés borés, éventuellement avec au moins une source de carbone, donne accès à de bons rendements de pyrolyse puisque, dans tous les cas, ces rendements sont supérieurs à ceux obtenus avec les polysilanes de départ et, la plupart du temps, supérieurs à 70 %. On constate, également, une amélioration de la pureté et de la qualité des céramiques finales visées. Celles-ci se caractérisent, dans certains cas, par un ratio Si/C de l'ordre de 70/30, les impuretés du type oxygène, carbone libre et bore étant présentes en quantités extrêmement réduites.

Suivant une disposition avantageuse de l'invention, la source de carbone, dénommée également agent fournisseur de carbone, est, en outre, douée de propriétés réticulantes à l'égard des polysilanes considérés. Les composés siliciés, du type alcynyle et/ou alcényle, et en particulier les composés siliciés vinyliques, sont des bons exemples de sources de carbone réticulantes.

De préférence, le procédé comprend, outre la pyrolyse, au moins un traitement thermique intermédiaire de chauffage des polysilanes ou du mélange polysilanes/agent de réticulation, ledit traitement précédant la pyrolyse et se déroulant à une température comprise entre 150 et 350 °C et, de préférence, entre 170 °C et 300 °C.

Il est clair que les conditions de durée/température du traitement intermédiaire du chauffage sont évidemment interdépendantes. En pratique, il faut savoir que l'on prévoit, de préférence, une durée de 1 minute à plusieurs heures (e.g 10 heures) et, plus préférentiellement encore, une durée de 5 à 120 minutes.

Selon l'une des caractéristiques essentielles de l'invention, les polysilanes de départ sont, avantageusement, des polyalkyl et/ou arylhydrogénosilanes. A titre d'exemples, on peut citer les polyméthylhydrogénosilanes et/ou les polyphénylhydrogénosilanes.

Sans que cela ne soit limitatif, on met en oeuvre, de façon privilégiée, les polysilanes dans lesquels au moins une partie des siliciums, situés dans la chaîne, ne sont porteurs que d'un radical alkyle, aryle ou aralkyle, le deuxième substituant ne pouvant être que l'hydrogène.

Il va de soi que l'invention ne se limite pas aux polysilanes d'un seul type, mais englobe également les mélanges de différents produits de formule **(I)**.

Outre la structure linéaire selon **(I)**, les polysilanes de départ peuvent être des produits cycliques.

Conformément à une disposition avantageuse de l'invention, ces polyalkyl, aryl ou aralkylhydrogénosilanes peuvent résulter de la réaction d'un métal alcalin, tel que le sodium, avec un mélange :

- de dihalogénoalkyl, aryl ou aralkylsilane ($X_2SiHR$) (e. g. dichlorométhylsilane = $MeHSiCl_2$),
- et d'un monohalogénoorganosilane $[XSiH(R^1)_2]$ avec $R^1$, identiques ou différents et représentant un radical hydrocarboné, de préférence un alkyle ayant de 1 à 6 C, (e. g. monochlorohydrogénodiméthylsilane).

Ces monohalogénoorganosilanes se comportent comme des agents bloqueurs d'extrémité des chaînes. Il est ainsi possible de maîtriser la longueur des chaînes du polymère en ajustant la proportion de l'agent bloqueur d'extrémité ou agent de terminaison. Il s'ensuit un intéressant contrôle de la viscosité des produits synthétisés, qui donne accès à une modulation et une adaptation, de ces précéramiques ou précurseurs de céramiques, aux opérations de formage

spécifiques de chaque application visée : film, revêtement, matrice...

Cela permet également d'introduire une proportion variable de carbone en jouant sur les substituants $R^1$ utilisés. Enfin, cela participe à l'augmentation des rendements de pyrolyse.

Le procédé selon l'invention consiste donc à effectuer la pyrolyse en présence de bore (avec ou sans fournisseur de C avantageusement réticulant) et, de préférence, en prévoyant un traitement thermique intermédiaire de chauffage.

L'incorporation du composé boré s'effectue avantageusement, au plus tard, au cours du traitement thermique intermédiaire.

De manière préférée, le composé boré fait partie des produits de départ de la réaction avec le polysilane.

Le traitement thermique de l'invention est, avantageusement, mis en oeuvre en atmosphère inerte confinée. Cela permet d'éviter toute contamination et d'optimiser le rendement en minimisant les pertes de produits volatils.

Parmi les voies méthodologiques envisageables pour le procédé selon l'invention, on peut citer, notamment :

**1** - la voie continue, ininterrompue jusqu'aux céramiques finales,

**2** - la voie discontinue dans laquelle le procédé est interrompu entre le traitement intermédiaire de chauffage et l'étape de pyrolyse.

Selon la voie **(1)** continue, le polysilane (e. g. polyméthylhydrogénosilane et/ou polyphénylhydrogénosilane) de départ est mélangé avec au moins un dérivé du bore, ledit mélange étant ensuite progressivement monté en température jusqu'à 1 000-1 500 °C, en prévoyant, éventuellement, un palier intermédiaire entre 170 et 300 °C.

Conformément à la voie **(2)** discontinue, le polysilane (e. g. polyméthylhydrogénosilane et/ou polyphénylhydrogénosilane) est, tout d'abord, mélangé à température ambiante avec une quantité catalytique d'au moins un dérivé du bore.

Avant la pyrolyse, on procède au traitement thermique intermédiaire par chauffage du mélange à une température, de préférence comprise entre 170 et 300 °C pendant cinq minutes à plusieurs heures. Les produits intermédiaires, i. e les précurseurs ou précéramiques, ainsi obtenus par ce procédé **(2)** selon l'invention, constituent d'autres objets de cette dernière.

Après une interruption de plus ou moins longue durée, qui peut être exploitée pour ramener à température ambiante le précurseur de céramiques (ou précéramique) ainsi obtenu, on met en oeuvre la pyrolyse classique (température finale de pyrolyse, par exemple comprise entre 1 000 et 1 500 °C).

Pour ces deux voies **(1)** et **(2)** de mise en oeuvre du procédé, il est avantageux de prévoir une incorporation d'au moins un agent fournisseur de carbone, formé, de préférence, par un réticulant insaturé et, plus préférentiellement encore, par un composé silicié vinylique, dans le milieu réactionnel.

Cette incorporation peut se faire, par exemple, simultanément au mélange de polysilane de départ et du composé boré ou lors de l'interruption entre le traitement thermique intermédiaire et la pyrolyse dans la voie **(2)** discontinue.

S'agissant du formage de la composition polysilanique dans une configuration d'article fini (film, fil ...), il s'opère bien entendu lorsque la composition est sous forme liquide, semi-liquide, pâteuse ou bien encore en solution.

Il est d'ailleurs possible de fixer la viscosité de la composition à une valeur adaptée au formage considéré. Cela peut, par exemple, se faire en ajustant la viscosité du polylsilane (e. g. polyméthylhydrogénosilane et/ou polyphénylhydrogénosilane) ou en choisissant la nature et la concentration la source de carbone.

Dans une moindre mesure, la nature du composé boré et sa concentration peuvent également avoir des effets à cet égard.

En ce qui concerne plus particulièrement la voie **(2)** discontinue, il est à noter que le formage peut être effectué lors de l'interruption.

A titre illustratif, et nullement limitatif, on précise ci-après la nature des dérivés borés susceptibles d'intervenir dans le cadre du procédé de l'invention.

Lesdits dérivés borés sont des composés à liaison B - N, B - O, B - R, B - X = halogène ...

Les familles suivantes de ces dérivés sont, entre autres, à considérer :

- les alkylborates de formule $R^4_a\ B(OR^5)_b$ dans laquelle :
  - . $a + b = 3$ et $a = 0$, 1 ou 2,
  - . $R^4$ est un groupe alkyle comportant de 1 à 20 atomes de carbone,
  - . $R^5 = R'$ ou $R^5 = -SiR'R''R'''$ ; R', R", R"' sont identiques ou différents et sont choisis parmi l'hydrogène ou les groupes alkyles comportant de 1 à 20 atomes de carbone ; parmi les composés de cette famille on citera tout particulièrement : $B(OMe)_3$ ; $B(OEt)_3$ ; $B(OSiMe_3)_3$,

- les alkylaminoboranes de formule : $R^4_aB(NR^5)_b$ dans laquelle :

. a, b, $R^4$ et $R^5$ sont tels que définis ci-dessus ; parmi les composés préférés de cette famille on citera tout particulièrement : $B(NMe_2)_3$ ; $MeB(NMe_2)_2$ ; $B[N(SiMe_3)_2]_3$,

- les boratranes, qui sont des composés polycycliques, de formule : $B[O(CH_2)_c]_3N$ dans laquelle c = 1, 2 ou 3 ; parmi les composés préférés de cette famille on citera tout particulièrement : $B(OCH_2CH_2)_3N$,
- les borazines, qui sont des composés cycliques, de formule : $-(BR^4 = NR^5-)_3$ dans laquelle :

. $R^4$ et $R^5$ sont tels que définis ci-dessus, $R^4$ pouvant, en outre, représenter l'hydrogène ; dans cette famille les composés suivants sont particulièrement préférés : $-(B(NH_2) = N(Me)-)_3$ ; $-[B(Me) = N(Me)]_3$,

- les alkylboroxines de formule : $-(BR^4 -O-)_3$ dans laquelle $R^4$ est tel que défini ci-dessus pour les borazines ; les composés préférés de cette famille sont : $-[B(Me)-O-]_3$,
- les alcoxyboroxines de formule : $-(B-(OR^6)-O-)_3$ dans laquelle $R^6 = R^4$ ou $R^5$ tels que définis ci-dessus ; les composés préférés de cette famille sont : $-(B(Me) = O-)_3$ ; $-(B(OMe) = O-)_3$,
- les trihalogénures de bore de formule $BX'_3$ dans laquelle X' = Cl, Br, F. Dans cette famille, on citera tout particulièrement le $BCl_3$.
- les polyborodi(hydrogéno et/ou alkyl et/ou aryl)siloxanes de formule :

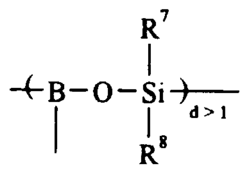

avec $R^7$, $R^8$ identiques ou différents entre eux et choisis parmi les radicaux suivants : hydrogène, alkyles, alcoxyles, N-alkyles, aryles, aralkyles, alcényles, aralcényles, alcynyles, aralcynyles. Le polyborodiphénylsiloxane est un composé particulièrement préféré dans cette famille.

Il va de soi que les susdits dérivés borés peuvent être mis en oeuvre seuls ou en mélange entre eux.

Il convient de noter également que la famille préférée, conformément à l'invention, est celle des borates.

Le composé boré est présent à raison de $10^{-2}$ % à 10 % en masse par rapport à la masse de polysilane de départ, de préférence de $10^{-2}$ % à 5 % et, plus préférentiellement encore, de $10^{-2}$ % à 2 %.

Le (ou les) agent(s) réticulant(s) associé(s) au(x) polysilane(s) de départ est(sont) choisi(s) parmi les produits organosiliciés insaturés, du type de ceux comprenant au moins deux double et/ou triple liaisons par molécule. Dans le cas où les insaturations portées par des siliciums sont du type alkényle, il s'agit, de préférence, d'un alkényle inférieur en $C_2$-$C_6$, tel que le vinyle, l'alkyle, l'$\alpha$-propényle ou le 3-butényle. L'alkényle plus particulièrement sélectionné est le vinyle ($CH_2$ = CH-). Les insaturations portées par des siliciums peuvent, également, être du type aralkényle, e. g. styryle.

A titre d'exemples d'agents, à la fois fournisseurs de carbone et réticulants appropriés, on peut citer :

- des (co)polymères dont l'unité récurrente est constituée par un motif :

$$\{R^9 - Si(H) - CH = CH\}$$

et/ou

$$\{R^9 - Si(H) - C \equiv C\}$$

et/ou

$$\{R^9 - (U_i) - Si - C \equiv C\}$$

dans lesquels $R^9$ est l'hydrogène, un alkyle inférieur, substitué ou non, ayant de 1 à 6 atomes de carbone ($CH_3$), un cycloalkyle, substitué ou non, ayant de 3 à 6 atomes de carbone ou un aryle, substitué ou non, ayant de 6 à

10 atomes de carbone et $U_i$ est une unité insaturée, de préférence vinylique,

- ou des composés de formules :

$$[R_2^{10}(CH_2 = CH)Si]Y,\ [R^{10}(CH_2 = CH)]_2Y,$$

$$[(CH_2 = CH)_3Si]_2Y,\ [R^{10}(CH_2 = CH)Y]_m,$$

dans lesquelles Y = O, S, NH, $NR^{11}$, $CH_2$, $CH_2CH_2$, phényle ; Y pouvant être absent comme, par exemple, dans $R_m^{10}(CH_2 = CH)_{3-m}$, Si - $Si(CH = CH_2)_{3-q}\,R_q^{10}$ (m, q = 0, 1, 2, m pouvant être identique ou différent de q), $(CH_2 = CH)_4Si$ cyclo $[R^{10}(CH_2 = CH)SiY^1]_p$ ou $[(CH_2 = CH)_2SiY^1]_p$, $Y^1$ représentant O, S, NH, $NR^{11}$, $CH_2$, CH = CH, C ≡ C ;p ≥ 2 lorsque $Y^1$ = NH, $NR^2$, S, $CH_2$, CH = CH, C ≡ C et p ≥ 3 lorsque $Y^1$ = 0 ; $R^{10}$ étant un alkyle inférieur en $C_1$ - $C_6$ ou un aryle en $C_6$-$C_{10}$, substitués ou non, $R^{11}$ répondant à la même définition que $R^{10}$ et pouvant être identique ou différent à ce dernier, les susdits composés pouvant être substitués par des groupements vinyles substitués, alkyles substitués ou non, à la place des groupements vinyles.

Conformément à l'invention, le tétravinylsilane et les polyvinylsilanes sont des agents fournisseurs de carbone et réticulants particulièrement appréciés. Les polyvinylsilanes peuvent être, notamment, ceux définis dans le brevet **US 4 783 516**.

Avantageusement, l'incorporation d'agent(s) de réticulation source(s) de carbone intervient lors d'une étape préalable au traitement thermique. Cette étape consiste à préparer, par mélange intime, une composition de départ comprenant :

- au moins un polysilane de formule **(I)**, de préférence le polyméthylhydrogénosilane et/ou le polyphénylhydrogénosilane,
- au moins un composé boré, de préférence un borate,
- et, éventuellement, au moins un agent fournisseur de carbone et formé, de préférence, par un composé vinylique et, plus préférentiellement encore, constitué par un vinylsilane.

L'invention a également pour objet la susdite composition de départ pour la préparation de matériaux céramiques et/ou de précurseurs de ceux-ci.

Conformément à une modalité intéressante, mais non indispensable, du procédé selon l'invention, on prévoit de mettre en oeuvre au moins un promoteur chimique et/ou physique de la réticulation. A titre d'exemples de promoteurs connus et appropriés, on peut citer les initiateurs radicalaires, tels que l'AzobisIsoButyroNitrile (AIBN), pour ce qui concerne les moyens chimiques et l'irradiation, e. g. UV ou bombardement électronique, pour ce qui concerne les moyens physiques.

Il ressort de ce qui précède que le procédé selon l'invention permet d'obtenir, de manière relativement rentable et rapide, des céramiques pures et de grande qualité.

## APPLICATION INDUTRIELLE :

Il faut souligner, également, le fait que le procédé selon l'invention permet un contrôle de la viscosité des précéramiques ou précurseurs de céramiques, leur conférant ainsi une adaptabilité aux différents modes de formage, spécifiques des articles en céramiques visés, films en revêtement, fibres, etc.

Enfin, il est important de noter que ce procédé est économique.

L'invention sera mieux comprise et d'autres de ses avantages ressortiront bien des exemples ci-après, qui décrivent la synthèse de céramiques conformes à l'invention, les polysilanes de départ, les catalyseurs borés envisageables, ainsi que certaines des variantes méthodologiques de la synthèse.

## EXEMPLES

Les polysilanes qui peuvent être utilisés selon cette invention sont, par exemple, les polyméthylsilanes dont la synthèse est décrite dans les demandes de brevets **EP 0 152 704, EP 0 217 539** et **EP 0 382 651.**

**EXEMPLE 1 : PRÉPARATION D'UN POLYMÉTHYLHYDROGÉNOSILANE (A) À PARTIR D'UN MÉLANGE $MeSiHC_2$/$Me_2SiHCl$.**

Dans un réacteur de 0,51 à double enveloppe muni d'une agitation mécanique (impeller), d'un réfrigérant et d'une sonde thermométrique, on introduit 250 ml de tolunène anhydre, 60,0 ml de dioxane anhydre et 41,05 g de sodium (1,78 mole). Le milieu réactionnel est porté à 100-102 °C. Le mélange de sodium fondu et de solvant est alors agité vigoureusement (600-700 tours/minute) afin d'obtenir une fine suspension de sodium. On laisse le système se stabiliser pendant 5 à 10 minutes de manière à obtenir une suspension homogène. On additionne alors goutte à goutte un mélange de 80,0 ml de méthyldichlorosilane (0,69 mole) et 2,0 ml de diméthylchlorosilane $Me_2SiHCl$ (0,018 mole). Afin de limiter l'importance du reflux, une partie des calories est éliminée en faisant circuler dans la double enveloppe un fluide caloporteur. Après la fin de l'addition, le milieu réactionnel est porté à reflux de solvant pendant 30 minutes. Le mélange obtenu est ensuite rapidement refroidi à température ambiante. Le PMHS **(A)** obtenu est récupéré après une série de manipulations qui incluent au moins une filtration, un lavage et au moins une évaporation du solvant.
Masse obtenue : 29,05 g.
Aspect du PMHS **(A)** : huile incolore transparente.
Rendement par rapport aux chlorosilanes de départ : 82,5%.
Formulation d'après l'analyse RMN$^1$H : SiH/Si = 0,55-0,58.
Viscosité dynamique du produit à température ambiante : 3200 cPs.
Contrairement aux procédés selon **EP 0 152 704**, **EP 0 217 539** et **EP 0 382 651,** la synthèse du PMHS **(A)** décrite ci-dessus permet un bon contrôle de la viscosité du polymère.

Les sources de carbone réticulantes mises en oeuvre sont, soit des polyvinylsilanes (PVS) soit le tétravinylesilane.

**EXEMPLE 2 : PRÉPARATION DE POLYVINYLSILANE (B).**

Dans un réacteur de 0,5 ml à double enveloppe muni d'une agitation mécanique (impeller), d'un réfrigérant et d'une sonde thermométrique, on introduit 190 ml de toluène anhydre, 30 ml de tétrahydrofurane anhydre et 41,05 g de sodium (1,78 mole). Le milieu réactionnel est porté à 100-102 °C. Le mélange de sodium fondu et de solvant est alors agité vigoureusement (700-800 tours minute) afin d'obtenir une fine suspension de sodium. On laisse le système se stabiliser pendant 5 à 10 minutes de manière à obtenir une suspension homogène. On additionne alors goutte à goutte un mélange de 99,0 ml d'un mélange de chlorosilanes composé de méthyldichlorosilane, de triméthylchlorosilane $Me_3SiCl$ et de vinylméthyldichlorosilane, les proportions respectives sont les suivantes : 0,5/0,3/1 ,0. Afin de limiter l'importance du reflux, une partie des calories est éliminée en faisant circuler dans la double enveloppe un fluide à 85-90 °C. Après la fin de l'addition, le milieu réactionnel est porté à reflux de solvant pendant 15-30 minutes. Le mélange obtenu est ensuite refroidi à température ambiante.
Le PVS (**B**) obtenu est additionné de 40 mg de BHT, puis récupéré après une série de manipulations, qui incluent au moins un lavage et au moins une évaporation. Pour plus de précisions, on peut se reporter aux méthodologies décrites dans le brevet **US 4 783 516**.
Aspect du PVS **(B)** : huile transparente.
Rendement par rapport aux chlorosilanes de départ : 81%.
Viscosité dynamique du produit à température ambiante : 900 cPs.

**EXEMPLE 3 : TESTS COMPARATIFS : EFFET DU BORE SUR UN MÉLANGE POLYMÉTHYLHYDROGÉNOSILANE/TÉTRAVINYLSILANE.**

**A** - SANS BORE :

Dans un tube de Schlenk, on introduit sous azote 3,07 g de polyméthylsilane **(A)** (89,8 %) et 0,35 g de tétravinylsilane (10,2 %). Le mélange est agité à température ambiante pendant 10 à 15 minutes. On obtient alors un liquide homogène transparent.
Viscosité du mélange mesurée à température ambiante : 280-300 cp.
Ce mélange est soumis au traitement thermique suivant :

- RÉTICULATION :

Dans un premier temps, le mélange est chauffé à 120 °C sous azote pendant 12 à 15 heures. On obtient alors une résine réticulée, solide et insoluble.

- PYROLYSE :

. 1er ESSAI :
Le produit obtenu après réticulation est alors pyrolysé dans les conditions suivantes :

* de T° ambiante à 230 °C : 2 °C/minute,
* palier de 4 heures à 230 °C,
* de 230 °C à 1 000 °C : 2 °C/minute,
* palier de 1 heure à 1 000 °C.

Le rendement de cette pyrolyse est de 65,4%.

. 2ème ESSAI :
Le produit obtenu est pyrolysé selon le programme de pyrolyse suivant :

* de T° ambiante à 1 000 °C : 2 °C/minute,
* palier de 1 heure à 1 000 °C.

Le rendement de cette pyrolyse est de 62,5%.

**B** - AVEC BORE (VOIE (1)):

Dans un tube de Schlenk, on introduit sous azote 3,33 g de polyméthylsilane (**A**) (88,5%) et 0,44 g de tétravinylsilane (11,5%) et 0,083 g de $B(OSiMe_3)_3$, soit 2% de $B(OSiMe_3)_3$ pour 100 g de mélange. Les trois produits sont agités à température ambiante pendant 10 à 15 minutes. On obtient alors un liquide homogène et transparent.
Viscosité du mélange mesurée à température ambiante : 250-300 cp.

Ce mélange est soumis au traitement thermique suivant :

- RÉTICULATION :

Dans un premier temps le mélange est chauffé à 120 °C sous azote pendant 12 à 15 heures. On obtient alors une résine solide et insoluble.

- TRAITEMENT THERMIQUE INTERMÉDIAIRE ET PYROLYSE EN CONTINU :

. 1er ESSAI :
Le produit obtenu est alors pyrolysé dans les conditions suivantes :

* de T° ambiante à 230 °C : 2 °C/minute,
* palier de 4 heures à 230 °C,
* de 230 °C à 1 000 °C : 2 °C/minute,
* palier de 1 heure à 1 000 °C.

Le rendement de cette pyrolyse est de 75,7%.

. 2ème ESSAI :
Le produit obtenu est pyrolysé selon le programme de pyrolyse suivant :

* de T° ambiante à 230 °C : 2 °C/minute,
* palier de 10 heures à 230 °C,
* de 230 °C à 1 000 °C : 1 °C/minute,
* palier de 1 heure à 1 000 °C,

Le rendement de cette pyrolyse est de 78,0%.

**EXEMPLE 4 : PRÉPARATION, TRAITEMENT THERMIQUE INTERMÉDIAIRE ET PYROLYSE D'UN MÉLANGE POLYMÉTHYLHYDROGÉNOSILANE/POLYVINYLSILANE PAR VOIE CONTINUE : VOIE (1) - AVANTAGES DE L'UTILISATION D'UN ADDITIF À BASE DE BORE - TEST COMPARATIF.**

Dans un tube de Schlenk, on prépare un mélange composé de 60 % de polyméthylsilane (**A**) (60,2 %) et 40 % de

Polyvinylsilane (**B**) (39,8 %). Une portion de ce mélange est traitée sans adjonction de $B(OSiMe_3)_3$ (produit a), dans une deuxième portion on additionne 2 % en masse de $B(OSiMe_3)_3$ (produit b), enfin, dans une troisième portion, on additionne 4 % en masse de $B(OSiMe_3)_3$ (produit c). Les trois mélanges sont agités à température ambiante pendant 10 à 15 minutes. On obtient alors des liquides homogènes et transparents.
Ces mélanges sont soumis au traitement thermique suivant :

- RÉTICULATION:

Dans un premier temps, le mélange est réticulé par un traitement à 130-140 °C sous azote pendant 12 à 15 heures.

- TRAITEMENT THERMIQUE INTERMÉDIAIRE ET PYROLYSE EN CONTINU :

Les produits obtenus après réticulation sont ensuite pyrolysés selon le programme de pyrolyse suivant :

* de T° ambiante à 230 °C : 2 °C/minute,
* palier de 5 heures à 230 °C,
* de 230 °C à 1 000 °C : 1 °C/minute,
* palier de 3 heures à 1 000 °C.

Les rendements de ces pyrolyses sont, respectivement :

* produit (a) : 60,9 %,
* produit (b) : 66,7 %,
* produit (c) : 68,2 %.

**EXEMPLE 5: PRÉPARATION, TRAITEMENT THERMIQUE INTERMEDIAIRE D'UN MÉLANGE POLYMÉTHYLHYDROGÉNOSILANE/BORATE - UTILISATION DE CE MÉLANGE POUR LA PRÉPARATION DE CÉRAMIQUES APRÈS INCORPORATION DE TÉTRAVINYLSILANE PAR VOIE DISCONTINUE: VOIE (2).**

L'exemple suivant décrit la préparation et l'utilisation d'un précurseur de SiC selon les étapes suivantes :

1 - traitement thermique intermédiaire du PMS par un dérivé du bore,
2 - ajout d'un agent fournisseur de carbone et de réticulant,
3 - pyrolyse du mélange pour obtenir la céramique.

1 - Le polyméthylsilane **(A)** est mis en oeuvre dans le présent exemple.
Dans un tube de Schlenk dégazé sous azote, on introduit 3,32 g de polyméthylsilane et 15 1 de $B(OSiMe_3)_3$.
Le mélange est agité et chauffé dans un bain d'huile à 210 °C pendant 1 h. Le réacteur est ensuite rapidement refroidi à T° ambiante. On obtient un solide jaune.
Masse : 3,21 g.
Rendement : 91,2%.

2 - Le produit obtenu précédemment est mélangé avec 1,45 ml d'un agent de réticulation, le tétravinylsilane. Ce composé agit comme diluant du polyméthylsilane traité au bore. Après 1 heure d'agitation, on obtient un mélange pâteux qui peut être moulé.

3 - Le mélange obtenu précédemment est ensuite porté à 130 °C pendant 4 heures sous azote. Une partie du produit est ramenée à T° ambiante. On obtient alors un solide infusible et insoluble.
L'autre partie du produit est pyrolysée sous azote à 10 °C/minute jusqu'à 1 000° C. Le rendement de cette pyrolyse est 82,3%.

**EXEMPLE 6 : TESTS COMPARATIFS DE TRAITEMENT DES POLYMÉTHYLHYDROGÉNOSILANES AVEC ET SANS DÉRIVE DU BORE.**

1 - PRÉPARATION DE POLYMÉTHYLHYDROGÉNOSILANE (**$A_1$**) :

Dans un réacteur de 1 l à double enveloppe muni d'une agitation mécanique, d'un condensateur et d'une sonde thermométrique, on introduit 450 ml de toluène anhydre et 85,0 g de sodium (3,69 moles). Le mélange toluène +

sodium est chauffé à 100 °C et vigoureusement agité de manière à obtenir une suspension. On additionne alors le méthyldichlorosilane, $MeHSiCl_2$ 160 ml (1,53 mole), à l'aide d'une seringue, à raison de 55 ml par minute. Une intense coloration noire apparaît dès l'introduction du chlorosilane cependant que la température à l'intérieur du réacteur est maintenue entre 104 et 106 °C. Après la fin de l'addition, le mélange réactionnel est porté à reflux de solvant pendant 4 heures. Le mélange obtenu est ensuite refroidi à température ambiante et les sels sont séparés par filtration sous azote. Le précipité est lavé avec 4 portions de 100 ml de toluène, puis les filtrats sont mélangés et concentrés par distillation du solvant sous vide à 30 °C. On récupère 44,5 g de PMHS (**$A_1$**) qui se présente sous la forme d'une huile jaune opaque. Le rendement par rapport au chlorosilane de départ est de 65,9%.
L'analyse spectroscopique par RMN du proton a montré que le polymère répond à la formule suivante :

$$-(\text{-SiMeH-})-_{0,55}\ -(\text{-SiMe})-_{0,45}$$

2- TRAITEMENT THERMIQUE INTERMÉDIAIRE DU POLYMÉTHYLHYDROGÉNOSILANE (**$A_1$**) EN PRÉSENCE DE TRIS(TRIMÉTHYLSILYL)-BORATE = PRÉPARATION DE MMHS (**$A_{11}$**) :

Dans un tube de Schlenk dégazé sous azote on introduit 3,52 g du polyméthylsilane (**$A_1$**) et 0,08 ml (0,066 g soit 0,2 m.mol.) de tris-(triméthylsily)borate $B(OSiMe_3)_3$. Le mélange est alors agité à température ambiante pendant 5 à 10 minutes, puis le réacteur est immergé dans un bain d'huile thermostaté à 240 °C. On constate la formation de quelques vapeurs qui se condensent sur les parties froides du tube. Après 40 à 50 minutes de traitement on observe un épaississement du milieu réactionnel. Le traitement est arrêté après 1 heure de réaction, le mélange est alors ramené à température ambiante par trempe à l'air. On récupère 3,08 g de PMHS (**$A_{11}$**) qui se présente sous la forme d'un solide jaune, facilement soluble dans le toluène, l'hexane, le tétrahydrofurane et chloroforme. Rendement : 87,5 %.

3 - TRAITEMENT THERMIQUE INTERMÉDIAIRE DU POLYMÉTHYLHYDROSILANE (**$A_1$**) = PRÉPARATION DE (**$A_{12}$**) :

Dans les conditions décrites au paragraphe 2, on réalise le traitement thermique du polyméthylhydrogénosilane (**$A_1$**) en l'absence de tris(triméthylsilylborate. Après 1 heure à 240 °C, on récupère 2,89 g de PMS (**$A_{12}$**) sous la forme d'une huile jaune visqueuse. Rendement : 93 %.

**ANALYSES THERMIQUES**

| PMS | RENDEMENTS DE PYROLYSE | |
|---|---|---|
| | Pyrolyse en four | Analyse thermogravimétrique |
| ($A_1$) | 28,0 % | 9,8 % |
| ($A_{12}$) | 16,2 % | 10,9 % |
| ($A_{11}$) | 72,1 % | 70,6 % |

Programme de température des analyses thermogravimétriques :
- * de 20 °C à 950 °C - 10 °C/min sans palier.

Programme de température des pyrolyses en four :
- * de 20 °C à 1 000 °C - 5 °C/min, palier de 1 heure à 1 000 °C.

**EXEMPLE 7 : INFLUENCE DE LA NATURE DU COMPOSÉ BORÉ.**

**A** - CAS D'UN BORATE ($B(OEt)_3$) :

Dans un tube de Schlenk inerté on introduit 1,65 g de polyméthylsilane (**$A_1$**) de l'exemple 11 et 50 l de triéthylborate, $B(OEt)_3$. Le mélange est alors agité à température ambiante pendant 5 à 10 minutes puis le réacteur est immergé directement dans un bain d'huile thermostaté à 220-230 °C. Après 1 heure de réaction on observe un épaississement du milieu réactionnel. Le traitement est arrêté après 2 heures de réaction et le mélange est alors ramené à température ambiante par trempe à l'air. Après élimination des composés volatils, on récupère 1,49 g d'un solide jaune.
Rendement : 90,3%.
L'analyse spectroscopique par RMN du proton a montré que le composé répond à la formule suivante :

$$-(\text{-SiMeH-})-_{0,33}\ -(\text{-SiMe-})-_{0,66}$$

Le composé obtenu est alors pyrolysé dans un four tubulaire sous azote.
Débit d'azote : 100 ml/minute.
Programme de température : de 20 °C à 1 000 °C à 5 °C/min, suivi d'un palier de 60 min à 1 000 °C.
Rendement de pyrolyse : 71%.

**B** - CAS D'UN BORATRANE ($B(OCH_2CH_2)_3N$) :

Dans un tube de Schlenk inerté on introduit 2,27 g de polyméthylsilane (**$A_2$**) et 14 mg de triéthanolamineborane, $B(OCH_2CH_2)_3N$. Le mélange est alors agité à température ambiante pendant pendant 5 à 10 minutes, puis le réacteur est immergé directement dans un bain d'huile thermostaté à 220-230 °C. Après quelques minutes de réaction on observe un épaississement du milieu réactionnel. Le traitement est arrêté après 15 minutes de réaction et le mélange est alors ramené à température ambiante par trempe à l'air. Après élimination des composés volatils par distillation sous vide, on récupère 2,08 g d'un solide jaune.
Rendement : 91,5%.
L'analyse spectroscopique par RMN du proton a montré que le composé répond à la formule suivante :

$$-(\text{-SiMeH-})-_{0,41}\ -(\text{-SiMe-})-_{0,59}$$

Le composé obtenu est alors pyrolysé dans un four tubulaire sous azote.
Débit d'azote : 100ml/minute.
Programme de montée en température : de 20 °C à 1 000 °C à 5 °C/min, suivi d'un palier de 60 min à 1 000 °C.
Rendement de pyrolyse : 73% .

**EXEMPLE 7 : PRÉPARATION DE POLYPHÉNYLHYDRIDOSILANE.**

La totalité de la préparation a été mise en oeuvre sous atmosphère inerte d'azote, sauf mention contraire.
On a ajouté, goutte à goutte, en 1 h 50, à la température ambiante (environ 20 °C), 20 ml de phényldichlorosilane (Petrarch Systems, Inc., Bristol, PA, Etats-Unis) (le silane avait été distillé sous vide avant utilisation) à 7 g d'un mélange, agité à l'aide d'un agitateur magnétique, d'une dispersion de sodium exempte d'huile minérale (obtenue auprès de ALFA Products, Ventron Division of Thiokol Corp., Danvers, MA, Etats-Unis), dont l'huile minérale avait été éliminée par lavage à l'aide d'hexane sec exempt d'oxygène, sous atmosphère d'azote, et recouverte de 150 ml de tétrahydrofuranne (THF) sec et exempt d'oxygène. Le produit a été agité pendant trois jours et le mélange rouge obtenu a été filtré pour éliminer la dispersion de sodium en excès et le NaCl. On a ajouté au filtrat 5 g de chlorure de cuivre (I) et le mélange a été agit à l'agitateur magnétique pendant un jour. La solution, maintenant jaune, a été filtrée et on a éliminé du filtrat le tétrahydrofuranne (THF) sous pression réduite, ce qui a laissé 10,9 g d'un polymère solide jaune pâle. Une analyse spectroscopique a montré qu ela composition du solide correspondant à la formule suivante :

$$[Si(C_6H_5)H]_{0,51}[Si(C_6H_5)_2H]_{0,49}$$

ce qui conserve la valence quatre. Ce polymère a été rapidement traité à l'air sous la forme d'un solide, sans modification significative.

**EXEMPLE 8 : COMPOSITION DE DÉPART = PMHS-POLYPHÉNYLSILANE.**

A 9,5 g de PMHS **(A)** (exemple 1), on mélange 0,5 g du polyphénylsilane de l'exemple 7.

8.1 SANS BORE :

On pyrolyse le mélange à 1 000 °C avec un palier de 120 min à 22 °C.
Rendement céramique : 62 %.
Analyse élémentaire du matériau céramique obtenu : Si = 55 %, C = 30 %.

8.2 AVEC BORE :

On ajoute, à ce mélange, 0,2 g de tris(triméthylsilylborate), afin d'obtenir un mélange homogène qui est ensuite pyrolysé sous azote à 1 000 °C avec un palier de 120 min à 22 °C.
Rendement céramique : 78 %.
Analyse élémentaire du matériau céramique obtenu : Si = 68 %, C = 30 %.

## Revendications

**1.** Procédé de préparation de matériaux céramiques à base de carbure de silicium (SiC), à partir de polysilanes, caractérisé :

☐ en ce que l'on sélectionne le ou les polysilanes parmi des polyalkyl et/ou arylhydrogénosilanes de formule :

$$\text{(I)} \qquad \left[ (RSiH)_x \quad (RSiL)_y \quad (R_3{}^1Si)_z \right]_n$$

dans laquelle :

- **R** = symbole désignant des radicaux identiques ou différents et représentant l'hydrogène, un alkyle inférieur, linéaire ou ramifié, substitué ou non et ayant de 1 à 6 C, un cycloalkyle, substitué ou non et ayant de 3 à 6 C, ou un aryle, substitué ou non et ayant de 6 à 10 C, de préférence 6 C,
- $\mathbf{R^1}$ = symbole désignant des radicaux identiques ou différents et représentant l'hydrogène ou un groupement aliphatique, alicyclique, de préférence (cyclo)alkyle, (cyclo)alcényle, linéaire ou ramifié, aryle, aralkyle ou aralcényle, éventuellement substitué, les groupements méthyle, éthyle et propyle étant particulièrement préférés,
- **L** = radical répondant à la même définition que $\mathbf{R^1}$ ou lien valentiel reliant l'atome de silicium à un autre atome de silicium appartenant à une autre chaîne,
- $\mathbf{n} \geq 1$, de préférence $\mathbf{n} \geq 3$ et, plus préférentiellement encore, $\mathbf{n} \geq 10$,
- $\mathbf{x} + \mathbf{y} = 1$, avec :

  . $0{,}3 \leq \mathbf{x} \leq 1$ et, de préférence, $0{,}5 \leq \mathbf{x} \leq 0{,}8$,
  . $0 \leq \mathbf{y} \leq 0{,}7$,
  . $0 \leq \mathbf{z} \leq 0{,}5$ et quand z = 0, la valence libre de chaque silicium d'extrémité est occupée par $\mathbf{R^2}$, symbole désignant des radicaux identiques ou différents et représentant un H ou un alkyle $\mathbf{C_1}$-$\mathbf{C_6}$,

☐ en ce que l'on pyrolyse les polyalkyl et/ou arylhydrogénosilanes (**I**) en présence d'au moins un composé boré pour promouvoir la réticulation des polyalkyl et/ou arylhydrogénosilanes par formation de liaison Si-Si et, éventuellement, d'au moins un agent fournisseur de carbone et formé par un réticulant organosilicié insaturé et, plus préférentiellement encore, par un composé silicié vinylique,

☐ et en ce que, outre la pyrolyse, on prévoit au moins un traitement thermique intermédiaire de chauffage du mélange polysilanes/agent de réticulation, ledit traitement précédant la pyrolyse et se déroulant à une température comprise entre 150 et 350 °C et, plus préférentiellement encore, entre 170 °C et 300 °C.

**2.** Procédé selon la revendication 1, caractérisé en ce que l'étape de chauffage intermédiaire dure de 1 minute à 10 heures, de préférence de 5 minutes à 120 minutes.

**3.** Procédé selon la revendications 1 ou 2, caractérisé en ce qu'il s'effectue selon une voie continue (1) ou discontinue (2).

**4.** Procédé selon l'une quelconque des revendications 1 à 3, caractérisé en ce que l'incorporation du composé boré s'effectue au plus tard au cours du traitement thermique intermédiaire.

**5.** Procédé selon l'une quelconque des revendications 1 à 4, caractérisé en ce que le composé boré est choisi parmi :

- les alkylborates de formule $R^4{}_a\ B(OR^5)_b$ dans laquelle :

  . $a + b = 3$ et $a = 0$, 1 ou 2,
  . $R^4$ est un groupe alkyle comportant de 1 à 20 atomes de carbone,
  . $R^5 = R'$ ou $R^5 = -SiR'R''R'''$;R', R", R"' sont identiques ou différents et sont choisis parmi l'hydrogène ou les groupes alkyles comportant de 1 à 20 atomes de carbone,

  $B(OMe)_3$, $B(OEt)_3$ et $B(OSiMe_3)_3$ faisant partie des alkylborates plus particulièrement préférés,
- les alkylaminoboranes de formule : $R^4{}_aB(NR^5)_b$ dans laquelle :

  . a, b, $R^4$ et $R^5$ sont tels que définis ci-dessus, $B(NMe_2)_3$, $MeB(NMe_2)_2$ et $B[N(SiMe_3)_2]_3$ faisant partie des alkylaminoboranes plus particulièrement préférés,

- les boratranes de formule : $B\ [O(CH_2)_c]_3N$ dans laquelle :

  . $c = 1$, 2 ou 3,

  $B(OCH_2CH_2)_3N$ étant l'un des boratranes plus particulièrement préféré,
- les borazines de formule : $-(\ BR^4 = NR^5-)_3$ dans laquelle :

  . $R^4$ et $R^5$ sont tels que définis ci-dessus, $R^4$ pouvant, en outre, représenter l'hydrogène,

  $-(B(NH_2) = N(Me)-)_3$ et $-[B(Me) = N(Me)]_3$, faisant partie des borazines plus particulièrement préférées,
- les alkylboroxines de formule : $-(BR^4\ -O-)_3$ dans laquelle :

  . $R^4$ est tel que défini ci-dessus pour les borazines,

  $-[B(Me)-O-]_3$ étant l'une des alkylboroxines plus particulièrement préférée,
- les alcoxyboroxines de formule : $-(B-(OR^6)-O-)_3$ dans laquelle :

  . $R^6 = R^4$ ou $R^5$ tels que définis ci-dessus,

  $-(B(Me) = O-)_3$, $-(B(OMe) = O-)_3$ faisant partie des alcoxyboroxines plus particulièrement préférées,
- les trihalogénures de bore de formule $BX'_3$ dans laquelle :

  . X' = Cl, Br, F,

  $BCl_3$ étant l'un des trihalogénures de bore plus particulièrement préféré,
- les polyborodi(hydrogéno et/ou alkyl et/ou aryl)siloxanes de formule :

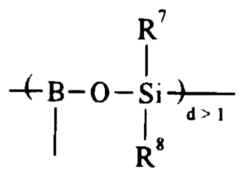

le polyborodiphénylsiloxane étant plus particulièrement préféré.

**6.** Procédé selon l'une des revendications 1 à 5, caractérisé en ce que l'on fait intervenir une quantité de composé (s) boré(s) comprise entre $10^{-2}$ % et 10 %, en masse, par rapport à la masse de polysilane(s) de départ.

**7.** Procédé selon l'une quelconque des revendications 1 à 6, caractérisé en ce que l'on prévoit une étape de formage d'articles destinés à être constitués de céramique.

**8.** Procédé selon l'une quelconque des revendications 1 à 7, caractérisé en ce que l'agent, fournisseur de carbone, associé au polysilane de départ, est un réticulant choisi parmi les produits organiques ou organosiliciés insaturés, de préférence vinyliques, le tétravinylsilane et les polyvinylsilanes étant particulièrement préférés.

**9.** Procédé selon l'une quelconque des revendications 1 à 8, caractérisé en ce qu'il consiste, dans une étape préalable, à préparer une composition de départ comprenant :

- au moins un polysilane de formule (**I**), de préférence le polyméthylhydrogénosilane et/ou le polyphénylhydrogénosilane,
- au moins un composé boré, de préférence un borate,
- et, éventuellement, au moins un agent fournisseur de carbone et formé, de préférence, par un composé vinylique et, plus préférentiellement encore, constitué par un vinylsilane.

**10.** Composition de départ pour la préparation de matériaux céramiques, caractérisée en ce qu'elle est obtenue par le procédé selon la revendication 9.

**Claims**

**1.** Process for the preparation of ceramic materials based on silicon carbide (SiC) from polysilanes, characterized in that:

☐ the polysilane or polysilanes are selected from polyalkyl- and/or polyaryl-hydrogenosilanes of the formula

$$(I) \qquad [(RSiH)_x(RSiL)_y(R^1{}_3Si)_z]_n$$

in which:

- R = a symbol denoting identical or different radicals and representing hydrogen, a substituted or unsubstituted, linear or branched lower alkyl having from 1 to 6 C, a substituted or unsubstituted cycloalkyl having from 3 to 6 C or a substituted or unsubstituted aryl having from 6 to 10 C, preferably 6 C,
- $R^1$ = a symbol denoting identical or different radicals and representing hydrogen, a linear or branched aliphatic or alicyclic group, preferably a (cyclo)alkyl or (cyclo)alkenyl group, or an optionally substituted aryl, aralkyl or aralkenyl group, the methyl, ethyl and propyl groups being particularly preferred,
- L = a radical defined in the same way as $R^1$ or a valence bond joining the silicon atom to another silicon atom belonging to another chain,
- $n \geq 1$, preferably $n \geq 3$ and particularly preferably $n \geq 10$, and
- $x + y = 1$, where:

  . $0.3 \leq x \leq 1$, preferably $0.5 \leq x \leq 0.8$,
  . $0 \leq y \leq 0.7$, and
  . $0 \leq z \leq 0.5$, and when $z = 0$, the free valency of each terminal silicon is occupied by $R^2$, a symbol denoting identical or different radicals and representing an H or a $C_1$-$C_6$ alkyl;

☐ the polyalkyl- and/or polyaryl-hydrogenosilanes (I) are pyrolyzed in the presence of at least one boron compound in order to promote the crosslinking of the polyalkyl- and/or polyaryl-hydrogenosilanes by the formation of an Si-Si bond, and optionally in the presence of at least one carbon donor consisting of an unsaturated organosilicon crosslinking agent and particularly preferably a vinylic silicon compound; and

☐ in addition to pyrolysis, provision is made for at least one intermediate heat treatment comprising the heating of the mixture of polysilanes and crosslinking agent, said treatment preceding the pyrolysis and taking place at a temperature of between 150 and 350°C and particularly preferably of between 170°C and 300°C.

**2.** Process according to claim 1, characterized in that the intermediate heating step lasts from 1 minute to 10 hours, preferably from 5 minutes to 120 minutes.

**3.** Process according to claim 1 or 2, characterized in that it is carried out continuously (1) or batchwise (2).

**4.** Process according to any one of claims 1 to 3, characterized in that the incorporation of the boron compound is effected at the latest during the intermediate heat treatment.

**5.** Process according to any one of claims 1 to 4, characterized in that the boron compound is selected from:

- the alkyl borates of the formula $R^4_aB(OR^5)_b$, in which:

  . $a + b = 3$ and $a = 0$, 1 or 2,
  . $R^4$ is an alkyl group containing from 1 to 20 carbon atoms, and
  . $R^5 = R^1$ or $R^5 = -SiR'R''R'''$, R', R" and R''' being identical or different and being selected from hydrogen and alkyl groups containing from 1 to 20 carbon atoms,

  $B(OMe)_3$, $B(OEt)_3$ and $B(OSiMe_3)_3$ being among the more particularly preferred alkyl borates;
- the alkylaminoboranes of the formula $R^4_aB(NR^5)_b$, in which:

  . a, b, $R^4$ and $R^5$ are as defined above,

  $B(NMe_2)_3$, $MeB(NMe_2)_2$ and $B[N(SiMe_3)_2]_3$ being among the more particularly preferred alkylaminoboranes;
- the boratranes of the formula $B[O(CH_2)_c]_3N$, in which:

  . c = 1, 2 or 3,

  $B(OCH_2CH_2)_3N$ being one of the more particularly preferred boratranes;
- the borazines of the formula $-(BR^4=NR^5-)_3$, in which:

  . $R^4$ and $R^5$ are as defined above, it also being possible for $R^4$ to be hydrogen,

  $-(B(NH_2)=N(Me)-)_3$ and $-[B(Me)=N(Me)]_3$ being among the more particularly preferred borazines;
- the alkylboroxines of the formula $-(BR^4-O-)_3$, in which:

  . $R^4$ is as defined above for the borazines,

  $-[B(Me)-O-]_3$ being one of the more particularly preferred alkylboroxines;
- the alkoxyboroxines of the formula $-(B-(OR^6)-O-)_3$, in which:

  . $R^6 = R^4$ or $R^5$ as defined above,

  $-(B(Me)=O-)_3$ and $-(B(OMe)=O-)_3$ being among the more particularly preferred alkoxyboroxines;
- the boron trihalides of the formula $BX'_3$, in which:

  . X'=Cl,Br or F,

  $BCl_3$ being one of the more particularly preferred boron trihalides; and
- the polyborodi(hydrogeno and/or alkyl and/or aryl)siloxanes of the formula

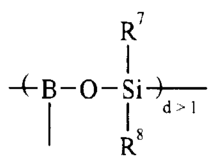

polyborodiphenylsiloxane being more particularly preferred.

**6.** Process according to one of claims 1 to 5, characterized in that the amount of boron compound(s) used is between $10^{-2}$ % and 10% by weight, based on the weight of the starting polysilane(s).

**7.** Process according to any one of claims 1 to 6, characterized in that provision is made for a step comprising the forming of articles which are to be made of ceramic.

**8.** Process according to any one of claims 1 to 7, characterized in that the carbon donor associated with the starting polysilane is a crosslinking agent selected from unsaturated organic or organosilicon products, preferably vinylic products, tetravinylsilane and polyvinylsilanes being particularly preferred.

**9.** Process according to any one of claims 1 to 8, characterized in that it consists, in a preliminary step, in preparing a starting composition comprising:

- at least one polysilane of formula (I), preferably polymethylhydrogenosilane and/or polyphenylhydrogenosilane,
- at least one boron compound, preferably a borate, and
- optionally at least one carbon donor, preferably consisting of a vinylic compound and particularly preferably a vinylsilane.

**10.** Starting composition for the preparation of ceramic materials, characterized in that it is obtained by the process according to claim 9.

**Patentansprüche**

**1.** Verfahren zur Herstellung keramischer Materialien auf der Basis von Siliciumcarbid (SiC) aus Polysilanen, gekennzeichnet durch folgende Maßnahmen:

☐ Auswählen des Polysilans oder der Polysilane unter Polyalkylhydrogensilanen und/oder Polyarylhydrogensilanen der Formel

$$[(RSiH)_x\ (RSiL)_y\ (R_3{}^1Si)_z]_n \qquad (I),$$

in der bedeuten:

. R Wasserstoff, geradkettiges oder verzweigtes und ggf. substituiertes $C_{1-6}$-Alkyl, $C_{3-6}$-Cycloalkyl, das ggf. substituiert ist, oder $C_{6-10}$-Aryl und vorzugsweise $C_6$-Aryl, das ggf. substituiert ist,
wobei die Substituenten R gleich oder verschieden sind,

. $R^1$ Wasserstoff oder eine geradkettige oder verzweigte aliphatische oder alicyclische Gruppe, vorzugsweise (Cyclo)alkyl oder (Cyclo)alkenyl, oder Aryl, Aralkyl oder Aralkenyl, die ggf. substituiert sind, wobei die Substituenten $R^1$ gleich oder verschieden sind und Methyl, Ethyl und Propyl besonders bevorzugt sind,

. L einen Substituenten mit gleicher Definition wie $R^1$ oder eine Einfachbindung, die das Siliciumatom mit einem anderen Siliciumatom verbindet, das zu einer anderen Kette gehört,

. $n \geq 1$ und vorzugsweise $n \geq 3$ und noch bevorzugter $n \geq 10$,
und

. $x + y = 1$ mit folgenden Bedingungen:

. $0{,}3 \leq x \leq 1$ und vorzugsweise $0{,}5 \leq x \leq 0{,}8$,
. $0 \leq y \leq 0{,}7$,
. $0 \leq z \leq 0{,}5$,

wobei im Fall z=0 die freie Valenz jedes endständigen Siliciumatoms durch einen Substituenten $R^2$ besetzt

ist, der Wasserstoff oder $C_{1-6}$-Alkyl bedeutet, wobei die Substituenten $R^2$ gleich oder verschieden sind,

☐ Pyrolysieren der Polyalkylhydrogensilane und/oder Polyarylhydrogensilane der Formel (I) in Gegenwart mindestens einer Borverbindung zur Förderung der Vernetzung der Polyalkylhydrogensilane und/oder Polyarylhydrogensilane durch Ausbildung von Si-Si-Bindungen und ggf. in Gegenwart mindestens eines Kohlenstoff liefernden Mittels, das durch ein ungesättigtes Organosilicium-Vernetzungsmittel und noch bevorzugter durch eine Vinylsiliciumverbindung gebildet wird,
sowie

☐ Vorsehen mindestens einer zwischengeschalteten thermischen Behandlung, zusätzlich zur Pyrolyse, durch Erhitzen des Polysilan/Vernetzungsmittel-Gemisches, das vor der Pyrolyse stattfindet und bei einer Temperatur von 150 bis 350 °C und noch bevorzugter bei einer Temperatur von 170 bis 300 °C vorgenommen wird.

**2.** Verfahren nach Anspruch 1, dadurch gekennzeichnet, daß die Stufe der zwischengeschalteten thermischen Behandlung während einer Dauer von 1 min bis 10 h und vorzugsweise während einer Dauer von 5 bis 120 min vorgenommen wird.

**3.** Verfahren nach Anspruch 1 oder 2, dadurch gekennzeichnet, daß es kontinuierlich (1) oder diskontinuierlich (2) durchgeführt wird.

**4.** Verfahren nach einem der Ansprüche 1 bis 3, dadurch gekennzeichnet, daß die Borverbindung spätestens im Verlauf der zwischengeschalteten thermischen Behandlung eingebracht wird.

**5.** Verfahren nach einem der Ansprüche 1 bis 4, dadurch gekennzeichnet, daß die Borverbindung ausgewählt wird unter

- Alkylboraten der Formel $R^4{}_aB(OR^5)_b$,
  worin bedeuten:

  . $a + b = 3$ und $a = 0$, 1 oder 2,
  . $R^4$ $C_{1-20}$-Alkyl
  und
  . $R^5 = R'$ oder $R^5 = -SiR'R''R'''$,
  wobei R', R" und R"' gleich oder verschieden und unter Wasserstoff und $C_{1-20}$-Alkylgruppen ausgewählt sind,

  wobei die zu den Alkylboraten gehörenden Verbindungen $B(OMe)_3$,$B(OEt)_3$ und $B(OSiMe_3)_3$besonders bevorzugt sind,

- Alkylaminoboranen der Formel $R^4{}_aB(NR^5)_b$, worin

  . a, b, $R^4$ und $R^5$ wie oben definiert sind,
  wobei die zu den Alkylaminoboranen gehörenden Verbindungen $B(NMe_2)_3$, $MeB(NMe_2)_2$ und $B[N(SiMe_3)_2]_3$ besonders bevorzugt sind,

- Boratranen der Formel $B[O(CH_2)_c]_3N$,worin

  . c 1, 2 oder 3 bedeutet,
  wobei die zu den Boratranen gehörende Verbindung $B(OCH_2CH_2)_3N$ besonders bevorzugt ist,

- Borazinen der Formel $-(BR^4{=}NR^5-)_3$, worin

  . $R^4$ und $R^5$ wie oben definiert sind und
  $R^4$ ferner Wasserstoff bedeuten kann,
  wobei die zu den Borazinen gehörenden Verbindungen $-(B(NH_2){=}N(Me)-)_3$ und $-[B(Me){=}N(Me)]_3$ besonders bevorzugt sind,

- Alkylboroxinen der Formel $-(BR^4-O-)_3$, worin

. $R^4$ wie oben für die Borazine definiert ist, wobei die zu den Alkylboroxinen gehörende Verbindung -[(Me)-O-]$_3$ besonders bevorzugt ist,

- Alkoxyboroxinen der Formel - (B-($OR^6$)-O-)$_3$, worin

  . $R^6$ die oben definierte Bedeutung von $R^4$ oder $R^5$ besitzt, wobei die zu den Alkoxyboroxinen gehörenden Verbindungen -(B(Me)=O-)$_3$ und -(B(OMe)=O-)$_3$ besonders bevorzugt sind,

- Bortrihalogeniden der Formel $BX'_3$, in der

  . X' Cl, Br oder F bedeutet, wobei die zu den Bortrihalogeniden gehörende Verbindung $BCl_3$ besonders bevorzugt ist,

sowie

- Polybordi(hydrogeno- und/oder -alkyl- und/oder -aryl)-siloxanen der Formel

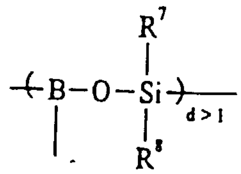

,

wobei Polybordiphenylsiloxan besonders bevorzugt ist.

**6.** Verfahren nach einem der Ansprüche 1 bis 5, dadurch gekennzeichnet, daß die Borverbindung bzw. die Borverbindungen in einem Mengenanteil von $10^{-2}$ bis 10 Masse-%, bezogen auf die Masse der als Ausgangsmaterial eingesetzten Polysilanverbindung(en), eingesetzt werden.

**7.** Verfahren nach einem der Ansprüche 1 bis 6, dadurch gekennzeichnet, daß eine Stufe der Erzeugung von Formkörpern vorgesehen wird, die aus Keramik bestehen sollen.

**8.** Verfahren nach einem der Ansprüche 1 bis 7, dadurch gekennzeichnet, daß das Kohlenstoff liefernde Mittel, das mit dem Ausgangs-Polysilan eingesetzt wird, ein Vernetzungsmittel ist, das unter ungesättigten organischen Verbindungen und Organosiliciumverbindungen und bevorzugt Vinylverbindungen ausgewählt ist, wobei Tetravinylsilan und Polyvinylsilane besonders bevorzugt sind.

**9.** Verfahren nach einem der Ansprüche 1 bis 8, gekennzeichnet durch eine vorgeschaltete Stufe, die in der Herstellung einer Ausgangszusammensetzung besteht, die enthält:

- mindestens ein Polysilan der Formel (I), vorzugsweise Polymethylhydrogensilan und/oder Polyphenylhydrogensilan, und
- mindestens eine Borverbindung, vorzugsweise ein Borat,
- sowie ggf. mindestens ein Kohlenstoff lieferndes Mittel, das vorzugsweise durch eine Vinylverbindung gebildet wird und noch bevorzugter aus einem Vinylsilan besteht.

**10.** Ausgangszusammensetzung zur Herstellung keramischer Materialien, dadurch gekennzeichnet, daß sie nach dem Verfahren nach Anspruch 9 erhalten ist.